# EUROPÄISCHE PATENTSCHRIFT

(11) **EP 2 755 533 B1**
(45) Veröffentlichungstag und Bekanntmachung des Hinweises auf die Patenterteilung: **18.11.2015**
(21) Anmeldenummer: 12772192.6
(22) Anmeldetag: 10.09.2012
(51) Int. Cl.: A47J 31/00, A47J 31/52

(54) **VERFAHREN ZUM ERZEUGEN EINES KAFFEEGETRÄNKS SOWIE KAFFEEAUTOMAT ZUM DURCHFÜHREN DES VERFAHRENS**
METHOD FOR PRODUCING A COFFEE BEVERAGE AND COFFEE MACHINE FOR PERFORMING THE METHOD
PROCÉDÉ DE PRÉPARATION D'UNE BOISSON À BASE DE CAFÉ AINSI QUE MACHINE À CAFÉ POUR LA MISE EN OEUVRE DE CE PROCÉDÉ

(30) Priorität: 13.09.2011 EP 11405320
(43) Veröffentlichungstag der Anmeldung: 23.07.2014
(73) Patentinhaber: JURA Elektroapparate AG, 4626 Niederbuchsiten (CH)
(72) Erfinder: BÜTTIKER, Philipp, 4625 Oberbuchsiten (CH)
(74) Vertreter: EGLI-EUROPEAN PATENT ATTORNEYS
(86) Internationale Anmeldenummer: PCT/CH2012/000214
(87) Internationale Veröffentlichungsnummer: WO 2013/037076

(56) Entgegenhaltungen:
- DE-U1-202006 014 317
- US-A1- 2007 261 564

## Beschreibung

Die vorliegende Erfindung betrifft ein Verfahren zum Erzeugen eines Kaffeegetränkes in einer Brühkammer eines Kaffeeautomaten sowie einen Kaffeeautomaten zum Durchführen eines Verfahrens zum Erzeugen eines Kaffeegetränkes in einer Brühkammer.

Insbesondere betrifft die Erfindung ein Verfahren, bei welchem der Volumenstrom, mit welchem Brühwasser zum Brühwassereinlass der Brühkammer zugeführt wird, während der Zubereitung des Kaffeegetränkes variiert wird.

Hierbei dient vorzugsweise zumindest ein Teil der Brühwasserzufuhr dem anfänglichen Druckaufbau in der Brühkammer.

Verfahren zum Erzeugen von Kaffeegetränken, bei welchen der Brühkammer das Brühwasser in getakteter bzw. gepulster Art und Weise zugeführt wird, sind in der Technik bekannt. So beschreibt beispielsweise die US-Patentschrift 7 225 728 B2 einen Kaffeeautomaten, bei welchem eine Steuervorrichtung eine pulsförmige Ansteuerung der Brühwasserpumpe vornimmt. Das Ziel derartiger aus dem Stand der Technik bekannter Verfahren ist stets, eine möglichst vollständige Benetzung der hydrophoben Kaffeemehlpartikel innerhalb der Brühkammer während des Brühvorganges zu gewährleisten. So wurde bereits bei den aus dem Stand der Technik bekannten Verfahren erkannt, dass sich im Inneren der in der Brühkammer vom Brühwasser durchsetzten Kaffeemehlmenge beim Durchtreten des Brühwassers regelrechte Vorzugspfade bilden, so dass die Benetzung der Gesamtmenge an Kaffeemehl innerhalb der Brühkammer für eine optimale Geschmacksausbildung nicht ausreichend homogen ist. Derartige beispielsweise aus der US 7,225,728 B2 bekannte Verfahren sehen nun einen intermittierenden Betrieb der Brühwasserpumpe vor, wobei die Brühwasserpumpe während des Brühvorganges über einen Zeitraum von mehreren Sekunden, beispielsweise zehn Sekunden eingeschaltet und anschliessend über einen Zeitraum von wenigen Sekunden, beispielsweise fünf Sekunden wieder ausgeschaltet wird. Eine derartige Pulssequenz kann sich je nach spezifischer Ausbildung des bekannten Verfahrens in Abhängigkeit vom gewünschten Geschmacksprofil des zuzubereitenden Kaffeegetränkes mehr oder weniger oft während eines Brühvorganges wiederholen. In jedem Fall wird bei derartigen aus dem Stand der Technik bekannten Verfahren durch die mehrsekündige Unterbrechung der resultierende Volumenstrom durch die Brühkammer auf Null reduziert.

Weiterhin ist es bekannt, am Kammerauslass der Brühkammer ein sogenanntes Crémaventil vorzusehen. Ein derartiges Ventil ist in der Regel mit einer selbsttätigen mechanischen Rückstelleinrichtung wie beispielsweise einer Spiralfeder versehen, welche in Schliessrichtung des Cremaventiles vorgespannt ist. In seiner Schliessstellung verschliesst ein derartiges bekanntes Cremaventil beispielsweise mit einem Gummizapfen den Kammerauslass. Steigt während eines Brühvorganges der Wasserdruck innerhalb der Brühkammer durch das zugeführte Brühwasser an, wird ein derartiges bekanntes Cremaventil durch den sich erhöhenden Druck gegen die Rückstellkraft der Spiralfeder in seine Öffnungsposition gedrückt, so dass sich am Kammerauslass ein mehr oder weniger schmaler Durchlassspalt ausbildet, durch welchen das gebrühte Kaffeegetränk dann einer Ausgabeeinrichtung, beispielsweise einem Kaffeeauslass, zugeführt wird. Ziel dieses Durchlassspaltes ist es, durch Verwirbelungen des austretenden Kaffeegetränkes einen besonders feinporigen, aromenbindenden Schaum, die sogenannte Crema auszubilden.

Die deutsche Gebrauchsmusterschrift DE 20 2006 014 317 U1 offenbart eine Kaffeemaschine mit einer an eine Heisswasserzuführung angeschlossenen Brüheinheit, wobei in die Kaffeeauslaufleitung ein federbelastetes, selbsttätig bei Druckbeaufschlagung öffnendes Cremaventil eingeschaltet ist. Zusätzlich ist als Aktor ein ansteuerbar ausgebildetes Stellelement zum gezielten Öffnen des Crémaventil vorgesehen. Die aus der DE 20 2006 014 317 U1 vorbekannte Lösung sieht vor, einen Brühzyklus beim Bereiten eines Kaffeegetränkes in zwei Phasen zu unterteilen, wobei während einer ersten Phase eine das Brühwasser in die Brüheinheit bzw. Brühkammer zuführende Pumpe mit einer Nennleistung oder mit einer mittleren Leistung betrieben wird. In einer anschliessenden zweiten Phase des Brühzyklus wird die Pumpe entweder weiter mit Nennleistung oder mit einer höheren Leistung angesteuert, um möglichst einen hohen Druck in der zweiten Phase des Brühzyklus innerhalb der Brühkammer zu erzielen.

Die US-Offenlegungsschrift US 2007/0261564 A1 offenbart ein Verfahren zum Extrahieren eines Espressokaffeegetränkes aus einer Espressokaffeemaschine, wobei die Espressokaffeemaschine eine Extraktionskammer aufweist, welcher heisses Brühwasser gesteuert zugeführt werden kann. Bei dem aus der US 2007/0261564 A1 vorbekannten Verfahren ist vorgesehen, während eines Vorbrühverfahrensschrittes heisses Wasser mit einem reduzierten Druck bzw. einer reduzierten Durchflussrate in die Brühkammer einzuleiten und nach einer Brühpause Brühwasser während einer zweiten Brühphase mit einem hohen Druck bzw. einer hohen Durchflussrate in die Brühkammer einzuleiten.

Bekannte Verfahren zum Erzeugen von Kaffeegetränken der eingangs genannten Art in herkömmlichen Kaffeeautomaten weisen nun den Nachteil auf, dass während eines Brühvorganges je nach Kammerdruck innerhalb der Brühkammer das Cremaventil zu einem von verschiedenen Störparametern wie beispielsweise variierender Federvorspannung oder Verklebungen des Gummizapfens abhängigen beliebigen Zeitpunkt schlagartig öffnet, so dass das dann mit hohem Druck die Brühkammer verlassende und in den Kaffeeauslauf geführte Kaffeegetränk mit hoher Geschwindigkeit und anfänglich hohem Druck aus dem Kaffeeauslauf des Kaffeeautomaten beispielsweise in eine leere Tasse schiesst.

Ein derartiges anfänglich schlagartiges Austreten des Kaffeegetränkes kann jedoch in nachteilhafter Weise zu einem Verspritzen des Kaffeegetränkes am Kaffeeauslass führen. Im schlimmsten Falle sind bei weiträumigen Verspritzen sogar Verbrühungen umstehender Personen möglich.

Der vorliegenden Erfindung liegt daher die Aufgabe zugrunde, die genannten Nachteile zu vermeiden, und insbesondere ein Verfahren zum Erzeugen eines Kaffeegetränkes in einer Brühkammer sowie einen Kaffeeautomaten zum Durchführen des Verfahrens anzugeben, mit welchem die Kaffeeausgabe insbesondere in einer ersten Phase des Kaffeebezuges am Auslauf bei gleichzeitig optimierter Benetzung des gemahlenen Kaffees und bei gleichbleibend hoher Cremaqualität verbessert werden kann, wenn ein Cremaventil verwendet wird.

Diese Aufgabe wird gelöst durch ein Verfahren zum Erzeugen eines Kaffeegetränkes mit den Merkmalen des Patentanspruches 1 sowie durch einen Kaffeeautomaten mit den Merkmalen des Patentanspruches 11.

Für das erfindungsgemässe Verfahren zum Erzeugen eines Kaffeegetränkes in einer Brühvorrichtung eines Kaffeeautomaten weist die Brühvorrichtung eine Brühkammer zum Aufnehmen gemahlenen Kaffees und die Brühkammer einen Brühwassereinlass und einen Kammerauslass auf. Durch Einleiten heissen Brühwassers in die Brühkammer durch den Brühwassereinlass benetzt das die Brühkammer so durchlaufende Brühwasser den in der Brühkammer aufgenommenen gemahlenen Kaffee, so dass am Kammerauslass gebrühtes Kaffeegetränk ausgegeben werden kann. Der Kaffeeautomat ist weiterhin mit einem Cremaventil ausgestattet, wobei das Cremaventil mittels einer selbsttätigen mechanischen Rückstelleinrichtung in Schliessrichtung vorgespannt ist und den Kammerauslass der Brühkammer in dieser durch die Vorspannung vorgegebenen Schliessstellung verschliesst. Unter Überwindung der Vorspannung der Rückstelleinrichtung, insbesondere einer Spiralfeder, ist das Cremaventil dazu ausgelegt, den Kammerauslass unter Ausbildung eines Durchlassspaltes freizugeben.

Das erfindungsgemässe Verfahren weist dabei einen ersten Zuführschritt und einen zweiten Zuführschritt auf, wobei im ersten Zuführschritt zunächst Brühwasser zum Brühwassereinlass der Brühkammer mit einem von Null verschiedenen ersten Volumenstrom während eines ersten Zeitraumes einer ersten Brühphase zugeführt wird, und wobei in einem zweiten Zuführschritt zumindest zeitweise Brühwasser zum Brühwassereinlass mit einem von Null verschiedenen zweiten und/oder dritten Volumenstrom während eines Zeitraumes zugeführt wird, der sich unmittelbar an den ersten Zeitraum der ersten Brühphase anschliesst. Während dieses Zeitraumes unmittelbar nach dem ersten Zeitraum der ersten Brühphase öffnet sich durch die geeignete Wahl des zweiten bzw. des dritten Volumenstroms das Cremaventil. Beim erfindungsgemässen Verfahren ist der zweite Volumenstrom des Brühwassers verschieden vom ersten Volumenstrom.

Beim erfindungsgemässen Verfahren umfasst der erste Zeitraum der ersten Brühphase dabei vorzugsweise auch den Zeitraum, in welchem ein anfänglicher Aufbau des Brühdruckes innerhalb der Brühkammer stattfindet.

Das erfindungsgemässe Verfahren weist unter anderem den besonderen Vorteil auf, dass durch geeignete Wahl des ersten Volumenstromes während des ersten Zeitraumes einer ersten Brühphase und ebenso durch geeignete Wahl des zweiten bzw. dritten Volumenstromes während des unmittelbar anschliessenden Zeitraumes ein schlagartiges, d.h. plötzliches Öffnen des Cremaventiles weitestgehend vermieden werden kann, so dass insbesondere zu Beginn des Kaffeebezuges das Kaffeegetränk nicht schlagartig und mit hohem Druck aus dem Kammerauslass ausgegeben wird. Durch geeignete Wahl des ersten und des zweiten bzw. dritten Volumenstromes bleibt gleichzeitig eine ausreichend hohe Ausgabegeschwindigkeit des gebrühten Kaffeegetränkes aus dem Kammerauslass gewährleistet. Dadurch, dass gleichzeitig das Mahlgut zumindest während eines der Zeiträume vergleichsweise langsam benetzt wird, haben die Geschmacksstoffe und die Aromen, welche aus den gemahlenen Kaffee gelöst werden sollen, ausreichend Zeit, in die wässrige Phase überzugehen. Durch die zumindest während eines der Zeiträume langsamere Fliessgeschwindigkeit des Brühwassers durch die Brühkammer ist gleichzeitig gewährleistet, dass ein das Brühwasser heizendes Heizelement eine konstantere Temperatur an das Brühwasser abgeben kann, so dass die Brühtemperatur über den Brühvorgang weitgehend konstant bleibt.

In einer vorteilhaften Weiterbildung der Erfindung ist vorgesehen, die einzelnen Zeiträume durch eine Volumenmessung festzulegen. Denkbar ist es hier insbesondere, die Menge des der Brühkammer zugeführten Brühwassers zu messen, wobei hier vorzugsweise ein Durchflussmesser (flow meter) zum Einsatz kommen kann. Hierbei wird, beispielsweise in Abhängigkeit eines gewissen bekannten Brühdruckbereiches bezogen auf die der Brühkammer in der ersten Brühphase zugeführten Brühwassermenge oder auch - im Anschluss an den Druckaufbau - in Abhängigkeit von einer vorgewählten oder vorwählbaren Menge an auszugegebendem Kaffeegetränk, die Dauer der Zeiträume auf eine Volumenmenge bezogen. Dadurch ist gewährleistet, dass der Brühkammer unabhängig vom konkreten Öffnungszeitpunkt des Cremaventils eine stets vergleichbare Brühwassermenge zugeführt wird, insbesondere während des ersten Zeitraumes der ersten Brühphase, in welchem der Brühdruckaufbau erfolgt. Weiterhin ist so gewährleistet, dass die ausgegebene Menge an Kaffeegetränk relativ genau bestimmbar ist.

In analoger Weise kann es ebenso vorgesehen sein, stattdessen oder auch zusätzlich das aus der Brühkammer ausgegebene Volumen zu messen. Auch hier kann wiederum ein Durchflussmesser zum Einsatz kommen, der beispielsweise zwischen dem Brühkammerauslass und der Kaffeeausgabeleitung angeordnet ist. Selbstverständlich ist eine derartige auslassbasierte Messung erst nach Öffnen des Cremaventils möglich, d.h. insbesondere nicht während des ersten Zeitraumes der ersten Brühphase. Eine zufuhrbasierte Volumenmessung wird daher bevorzugt von einer derartigen auslassbasierten Messung unterstützt.

In bevorzugter Weise weist der zweite Verfahrensschritt des erfindungsgemässen Verfahrens einen Zuführschritt von Brühwasser zum Brühwassereinlass mit einem von Null verschiedenen zweiten Volumenstrom während eines zweiten Zeitraumes der ersten Brühphase auf.

Weiterhin ist beispielsweise vorgesehen, dass der zweite Volumenstrom geringer als der erste Volumenstrom ist. Hierdurch kann erreicht werden, dass der Brühvorgang relativ schnell eingeleitet wird, d.h. dass während des ersten Zeitraumes, während dessen der erste, grössere Volumenstrom in die Brühkammer einströmt, das Kaffeepulver weitestgehend vollständig benetzt wird. Durch die Verringerung des Volumenstromes im anschliessenden zweiten Zeitraum der ersten Brühphase ist dann gewährleistet, dass trotz des relativ schnellen Einleitens des Brühvorganges der ersten Brühphase das Crémaventil relativ sanft öffnet, was ein ebenso sanftes, relativ gleichmässiges Ausleiten des gebrühten Kaffeegetränkes aus dem Kammerauslass auch unmittelbar nach diesem Öffnungsvorgang des Crémaventiles zur Folge hat.

In ähnlicher Weise kann es vorgesehen sein, dass der dritte Volumenstrom geringer ist als der erste Volumenstrom, sodass wiederum ein relativ sanftes gleichmässiges Öffnen des Cremaventils gewährleistet ist.

Zum weiteren Verbessern der Qualität des ausgegebenen gebrühten Kaffeegetränkes kann eine weitere, sich an die erste Brühphase anschliessende zweite Brühphase vorgesehen sein. Üblicherweise erfolgt in einem derartigen Fall während der ersten Brühphase das sogenannte Vorbrühen, d.h. die weitestgehend vollständige Benetzung des Kaffeemehles innerhalb der Brühkammer mit Brühwasser; die eigentliche Kaffeebrühung erfolgt dann in der anschliessenden zweiten Brühphase. In einem solchen Fall weist das erfindungsgemässe Verfahren zusätzlich einen dritten und einen vierten Brühwasserzuführschritt auf, wobei während des dritten Brühwasserzuführschrittes Brühwasser zum Brühwassereinlass der Brühkammer mit einem von Null verschiedenen dritten Volumenstrom während eines ersten Zeitraumes der zweiten Brühphase zugeführt wird, und wobei in dem vierten Zuführungsschritt Brühwasser zum Brühwassereinlass mit einem von Null verschiedenen vierten Volumenstrom während eines zweiten Zeitraumes der zweiten Brühphase zugeführt wird. Der vierte Volumenstrom ist für diese vorteilhafte Weiterbildung verschieden vom dritten Volumenstrom.

Von Vorteil, jedoch nicht zwingend erforderlich ist hierbei, wenn der dritte Volumenstrom während des ersten Zeitraumes der zweiten Brühphase in einer ähnlichen Grössenordnung liegt wie der zweite Volumenstrom während des zweiten Zeitraumes der ersten Brühphase. In jedem Fall ist durch eine geeignete Wahl des dritten Volumenstromes insbesondere in Bezug auf den zweiten Volumenstrom gewährleistet, dass sich das Cremaventil abermals relativ sanft unter relativ langsamer Freigabe des Kammerauslasses wieder öffnet, selbst wenn es nach Beendigung des zweiten Zeitraumes der ersten Brühphase durch die Rückstelleinrichtung wieder in seine Schliessstellung gedrückt worden sein sollte. Ebenso kann auf diese Weise gewährleistet werden, dass selbst dann, wenn das Cremaventil während des zweiten Zeitraumes der ersten Brühphase überhaupt nicht geöffnet wurde, in jedem Fall ein sanftes Freigeben des Kammerauslasses, d.h. ein sanftes Öffnen des Cremaventiles in dem sich anschliessenden ersten Zeitraum der zweiten Brühphase erfolgt. Ein derartiges Verhalten kann insbesondere durch sich verändernde Parameter des Cremaventiles - wie Verschleiss der Rückstelleinrichtung oder das Verkleben eines am Cremaventil befestigten dichtenden Gummizapfens mit dem Kammerauslass - ergeben. Obwohl der Öffnungszeitpunkt des Cremaventiles durch diese sich ändernden Faktoren im Voraus nicht genau angegeben werden kann, ist durch die vorteilhafte Weiterbildung des erfindungsgemässen Verfahren jedoch gewährleistet, dass ein Öffnen des Cremaventiles zumindest während eines der beiden in Frage kommenden Zeiträume, nämlich während des zweiten Zeitraumes der ersten Brühphase und/oder während des ersten Zeitraumes der zweiten Brühphase sanft und nicht schlagartig erfolgt. Hierdurch kann insbesondere auch auf kostenträchtige zusätzliche Sensoren, welche ein Öffnen bzw. Schliessen des Cremaventiles erfassen, verzichtet werden.

In einer weiteren vorteilhaften Weiterbildung des erfindungsgemässen Verfahrens ist vorgesehen, dass der vierte Volumenstrom grösser als der dritte Volumenstrom ist. Während das relativ sanfte Öffnen des Cremaventiles in diesem Fall jedenfalls während des zweiten Zeitraumes der ersten Brühphase und/oder während des ersten Zeitraumes der zweiten Brühphase stattgefunden hat und der Kammerauslass der Brühkammer dann in einem geöffneten Zustand vorliegt, kann durch ein anschliessendes Erhöhen des Brühwasservolumenstroms während des zweiten Zeitraumes der zweiten Brühphase das Kaffeegetränk dann zügig ausgegeben werden. Neben einer Verkürzung der Wartezeit auf das fertig gebrühte Kaffeegetränk hat dieses zügige Ausgeben während des zweiten Zeitraumes der zweiten Brühphase durch den im Vergleich zum dritten Volumenstrom höheren vierten Volumenstrom weiterhin den Vorteil, dass nicht unnötig viele Bitterstoffe, welche den Geschmack des Kaffeegetränkes in unliebsamer Weise beeinträchtigen könnten, aus dem gemahlenen Kaffee gelöst werden.

Weiterhin kann es in vorteilhafter Weise vorgesehen sein, das Zuführen von Brühwasser zum Brühwassereinlass während einer Brühpause, welche zeitlich zwischen der ersten Brühphase und der zweiten Brühphase gelegen ist, zu unterbrechen. In einer derartigen Brühpause zwischen der Vorbrühphase und der Kaffeebrühung, d.h. zwischen der ersten Brühphase und der zweiten Brühphase kann durch die entsprechend langsamere Benetzung des Mahlgutes durch das in der Brühkammer während der Brühpause verweilende Brühwasser die Qualität des auszugebenden Kaffeegetränkes weiter angehoben werden, da sich der Zeitraum, in welchem die Geschmackstoffe und die Aromen in die wässrige Phase übergehen, weiter verlängert.

Gleichzeitig ist aber auch in diesem Fall gewährleistet, dass das Cremaventil relativ sanft - nämlich während des zweiten Zeitraumes der ersten Brühphase, in welchem der zweite Volumenstrom die Brühkammer durchfliesst und/oder während des ersten Zeitraumes der zweiten Brühphase, während der dritte Volumenstrom die Brühkammer durchfliesst - geöffnet wird, sodass auch in diesem Fall kein ungewolltes Spritzen des Kaffeeaustrittsstrahles an einem dem Kammerauslass nachgeordneten Kaffeeauslauf erfolgt.

In besonders vorteilhafter Weise wird das Verfahren derart angepasst, dass der Brühkammer während des ersten Zeitraumes der ersten Brühphase ein grösseres Volumen an Brühwasser zugeführt wird als während des zweiten Zeitraumes der ersten Brühphase. In diesem Fall wird mit relativ hoher Geschwindigkeit während des ersten Zeitraumes ein ausreichender Druck innerhalb der Brühkammer aufgebaut, so dass das Mahlgut im Wesentlichen vollständig benetzt wird. Gleichzeitig wird der Volumenstrom in diesem Fall erst dann reduziert, wenn im Rahmen der Ventilparameter des Cremaventiles erstmalig mit einem druckbedingten Öffnen des Crémaventiles zu rechnen ist. Vorzugsweise ist vorgesehen, dass während des ersten Zeitraumes der ersten Brühphase etwa 80% des Brühwasser-Gesamtvolumens der ersten Brühphase zugeführt werden. Demzufolge verbleiben für den zweiten Zeitraum der ersten Brühphase die restlichen 20% des Brühwasservolumens, das für die erste Brühphase vorgesehen ist. Durch eine derartige Aufteilung kann eine relativ schnelle Gesamtzeit der Kaffeezubereitung erreicht werden, ohne dass der Volumenstrom zu früh reduziert wird. Dadurch kann wiederum ein schlagartiges Öffnen des Cremaventiles vermieden werden.

In ähnlicher Weise kann es alternativ oder zusätzlich vorgesehen sein, der Brühkammer während des ersten Zeitraumes der zweiten Brühphase ein geringeres Volumen als während des zweiten Zeitraumes der zweiten Brühphase zuzuführen. Hierdurch ergibt sich insbesondere der Vorteil, dass auch während der zweiten Brühphase, d.h. während der hauptsächlichen Kaffeebrühung, die Gesamtzeit, welche zum Kaffeebezug benötigt wird, in optimaler Weise reduziert wird. Nachdem somit während eines relativ kurzen ersten Zeitraumes der zweiten Brühphase das gewollte sanfte Öffnen des Cremaventiles sichergestellt wurde, wird durch den im Vergleich zum dritten Volumenstrom hohen vierten Volumenstrom während des zweiten Zeitraumes der zweiten Brühphase eine zügige Kaffeeausgabe erreicht.

In besonders vorteilhafter Weise ist es vorgesehen, dass sich der zweite Zeitraum der ersten Brühphase unmittelbar und unterbrechungsfrei an den ersten Zeitraum der ersten Brühphase anschliesst. In ähnlicher Weise kann es alternativ oder zusätzlich vorgesehen sein, dass sich der zweite Zeitraum der zweiten Brühphase unmittelbar und unterbrechungsfrei an den ersten Zeitraum der zweiten Brühphase anschliesst. Durch die unterbrechungsfreie Reduktion bzw. Erhöhung der jeweiligen Volumenströme kann dann ein stetiges Durchströmen der Brühkammer erreicht werden. Dieses stetige Durchströmen der Brühkammer bzw. die stetige Druckerhöhung haben den Vorteil, dass das Crémaventil nach seinem Öffnen durch den Druckabfall am Kammerauslass nicht wieder in seine Geschlossenstellung gedrückt wird. Weiterhin kann dadurch ein Ventilflattern weitgehend vermieden werden.

In einem Kaffeeautomaten zum Durchführen des erfindungsgemässen Verfahrens ist eine Pumpe vorgesehen, die dem Brühwassereinlass der Brühkammer das Brühwasser zuführt. Weiterhin ist bei einem Kaffeeautomaten zum Durchführen des erfindungsgemässen Verfahrens eine Pumpensteuereinrichtung zum Ansteuern der Pumpe vorgesehen. Das Vorsehen einer mittels der Pumpensteuereinrichtung ansteuerbaren Pumpe hat den Vorteil, dass beispielsweise durch Leistungssteuerung der Pumpe die erforderliche Variabilität der einzelnen Volumenströme relativ einfach erfolgen kann.

Insbesondere kann es vorgesehen sein, die Pumpe als Schwingkolbenpumpe auszubilden. Eine derartige als Schwingkolbenpumpe ausgeführte Pumpe zur Brühwasserzufuhr weist hierbei insbesondere den Vorteil der einfachen Steuerbarkeit hinsichtlich der Volumenströme bei gleichzeitig gutem Wirkungsgrad und langer Lebensdauer auf. Es ist selbstverständlich aber auch möglich, andere Pumpentypen einzusetzen, soweit diese die für das erfindungsgemässe Verfahren erforderliche zeitbasierte Steuerbarkeit der Volumenströme erlauben.

In vorteilhafter Weise kann es vorgesehen sein, die Pumpensteuereinrichtung des Kaffeeautomaten zum Durchführen des erfindungsgemässen Verfahrens derart auszulegen, dass sie die Volumenströme des zugeführten Brühwassers durch eine Ansteuerung der Pumpe unterbrechungsfrei variiert. Durch das unterbrechungsfreie Variieren der Volumenströme ergibt sich insbesondere der Vorteil, dass die Pumpe kontinuierlich fördert, was einen kontinuierlichen Auslass des gebrühten Kaffeegetränkes erlaubt und ein Rückschlagen von Flüssigkeit innerhalb der Ausgabeleitungen und innerhalb der Pumpe vermeidet.

Ein Variieren der Volumenströme mittels der Pumpensteuereinrichtung kann bei einer Wechselspannungsansteuerung, wie sie insbesondere bei einer Schwingkolbenpumpe ohnehin von Nöten ist, auf einfache Weise durch Halbwellen- oder Periodenunterdrückung einzelner oder mehrerer aufeinanderfolgender Halbwellen bzw. Vollperioden der Wechselspannung erfolgen. Auf diese Weise ist eine besonders einfache Reduktion der Volumenströme möglich.

Ebenso gut kann aber auch zur Reduktion der Volumenströme bei einer Wechselspannungsansteuerung der Pumpe eine entsprechende Phasenanschnittssteuerung durch die Pumpensteuereinrichtung erfolgen.

Die Pumpensteuerung kann ferner dazu ausgelegt sein, in Abhängigkeit einer eingestellten oder einstellbaren Art des gemahlenen Kaffees oder auch Menge des gemahlenen Kaffees verschiedene Parameter des erfindungsgemässen Verfahrens selbsttätig zu variieren. Zu diesen Parametern zählen insbesondere der zeitliche Beginn des ersten Zeitraumes und des zweiten Zeitraumes der ersten Brühphase und in ähnlicher Weise der zeitliche Beginn des ersten Zeitraumes und des zweiten Zeitraumes der zweiten Brühphase. Ebenso zählen zu diesen Parametern die Dauer der jeweiligen Zeiträume der ersten Brühphase und in ähnlicher Weise die Dauer der Zeiträume der zweiten Brühphase. Ebenso kann es vorgesehen sein, die Dauer der Brühpause des erfindungsgemässen Verfahrens mit Hilfe der Pumpensteuereinrichtung selbsttätig zu variieren.

Weitere Einzelheiten der Erfindung und insbesondere eine Ausführungsvariante des erfindungsgemässen Verfahrens werden im Folgenden anhand der beigefügten Zeichnungen näher erläutert. Es zeigen:
- Fig. 1: eine schematische Darstellung eines Kaffeeautomaten mit einer Brühwasserpumpe, einer eine Brühkammer umfassenden Brühvorrichtung und einem Crémaventil;
- Fig. 2: die Brühvorrichtung gemäss Fig. 1, in einem Längsschnitt;
- Fig. 3: ein kombiniertes Diagramm der Stellung des Cremaventiles und der Einschaltzeiträume der Brühwasserpumpe, jeweils über der Zeit, in dem Kaffeeautomaten gemäss Fig. 1, bei Durchführung des erfindungsgemässen Verfahrens gemäss der Ausführungsvariante; und
- Fig. 4: ein zu der Zeitachse des Diagrammes aus Fig. 1 korrespondierendes weiteres Diagramm des geförderten Brühwasservolumens über der Zeit.

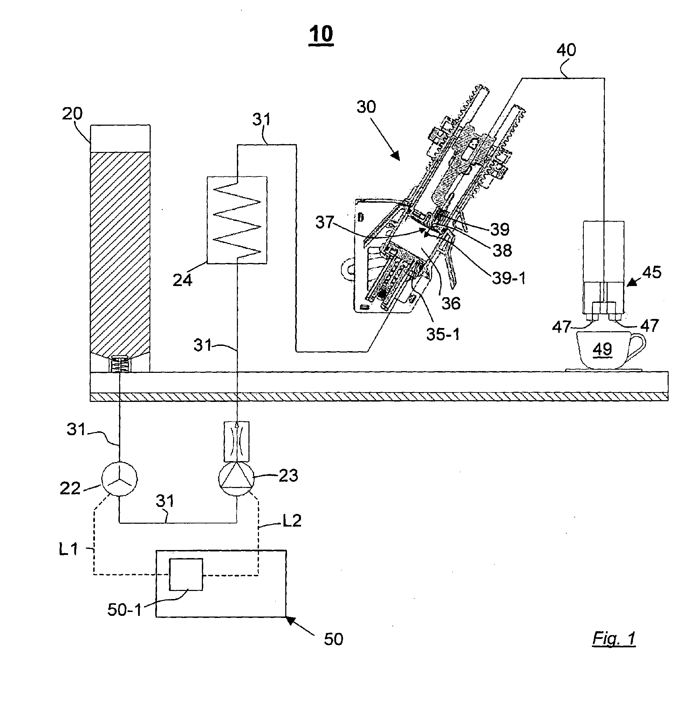

Die Figur 1 zeigt einen - zur Durchführung des erfindungsgemässen Verfahrens zum Erzeugen eines Kaffeegetränkes geeigneten - Kaffeeautomaten 10 mit einer Brühvorrichtung 30 zum Erzeugen eines Kaffeegetränkes. Die Brühvorrichtung 30 umfasst insbesondere eine Brühkammer 36 zum Aufnehmen gemahlenen Kaffees, wobei die Brühkammer 36 einen Brühwassereinlass 35-1 zum Zuführen von Brühwasser und einen Kammerauslass 37 zum Abführen eines in der Brühkammer 36 gebrühten Kaffeegetränks aufweist.

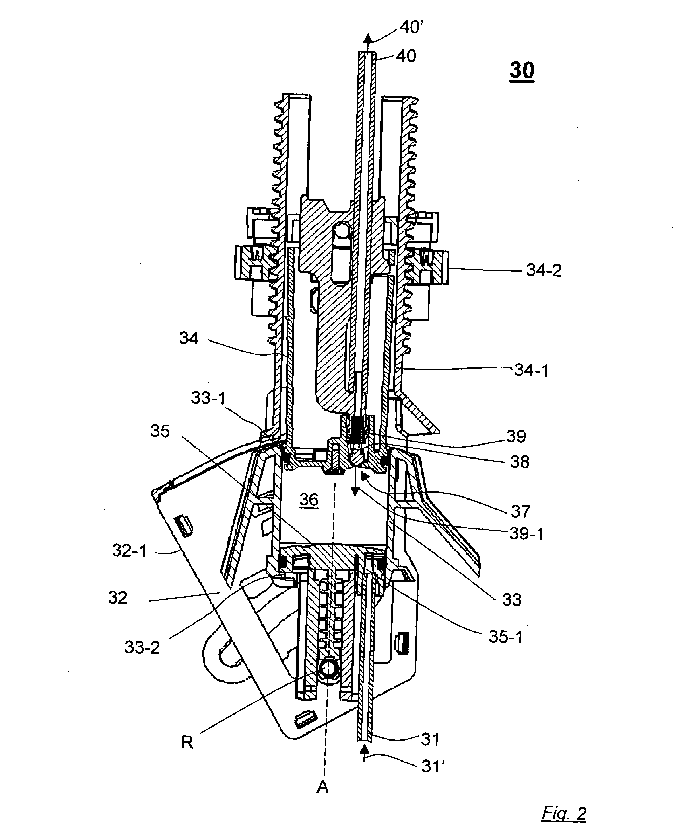

Wie Fig. 1 und 2 andeuten, ist die Brühvorrichtung 30 mit einer in den Brühwassereinlass 35-1 mündende Brühwasser-Zufuhrleitung 31 verbunden, durch welche zum Zwecke des Brühens eines Kaffeegetränks erhitztes Brühwasser in die Brühkammer 36 eingeleitet wird. Die erforderliche Brühwassertemperatur (vorzugsweise im Bereich zwischen 90 und 95 °C) in der Brühwasser-Zufuhrleitung 31 wird dabei durch Erhitzen in einem Brühwassererhitzer 24, welcher beispielsweise als Durchlauferhitzer ausgebildet sein kann, gewährleistet. Dem Brühwassererhitzer 24 wird zu diesem Zweck Frischwasser aus einem Wassertank 20 zugeführt, wobei der benötigte Wasserdruck von einer (Brühwasser-) Pumpe 23, welche im vorliegenden Beispiel zwischen dem Wassertank 20 und dem Brühwassererhitzer 24 angeordnet ist, aufgebaut wird.

Der Kaffeeautomat 10 umfasst weiterhin eine Kaffee-Ausgabeleitung 40, welche die Brühkammer 36 mit einer Kaffee-Ausgabeeinrichtung 45 verbindet und einen mit der Brühkammer 36 verbundenen brühkammerseitigen Endbereich sowie einen mit einer Kaffee-Ausgabeeinrichtung 45 verbundenen ausgabeseitigen Endbereich aufweist. Der brühkammerseitige Endbereich der Kaffee-Ausgabeleitung 40 steht in einer Fluid-Verbindung mit dem Kammerauslass 37 und dient der Aufnahme eines in der Brühkammer 36 gebrühten Kaffeegetränks. Im vorliegenden Beispiel mündet die Kaffee-Ausgabeleitung 40 an einem der Brühvorrichtung 30 abgewandten Ende in die Kaffee-Ausgabeeinrichtung 45, welche zwei nebeneinander angeordnete Kaffee-Ausgangsöffnungen 47 aufweist, durch welche ein in der Brühvorrichtung 30 gebrühtes Kaffeegetränk aus der Kaffee-Ausgabeleitung 40 fliessen kann, beispielsweise in ein unter den Kaffee-Ausgangsöffnungen 47 angeordnetes Trinkgefäss 49. Weiterhin ist ein Durchflussmesser 22 in der Brühwasser-Zufuhrleitung 31 zwischen dem Wassertank 20 und dem Brühwassererhitzer 24 angeordnet, um eine Information über die der Brühkammer 36 zugeführte Menge an Brühwasser bzw. eine Information über den Volumenstrom des in die Brühkammer 36 zugeführten Brühwassers zur Verfügung zu stellen. Ein ähnlicher Durchflussmesser kann selbstverständlich auch zwischen dem Brühwassererhitzer 24 und der Brühvorrichtung 30 angeordnet sein. Weiterhin ist es denkbar, zusätzlich oder ausschliesslich einen ähnlichen Durchflussmesser in der Kaffee-Ausgabeleitung 40 anzuordnen.

Wie Fig. 1 andeutet, ist der Kaffeeautomat 10 weiterhin mit einer Steuereinheit 50 ausgestattet, welche u.a. eine Pumpensteuereinrichtung 50-1 zur Steuerung der Pumpe 23 umfasst und weiterhin dazu ausgebildet ist, den Durchlauferhitzer 24 und die Brühvorrichtung 30 zu steuern. Wie Fig. 1 insbesondere andeutet, ist die Steuereinheit 50 bzw. die Pumpensteuereinrichtung 50-1 mit dem Durchflussmesser 22 über eine Leitung L1 zur Übertragung von Mess- und/oder Steuersignalen verbunden, sodass Messsignale des Durchflussmessers 22 bezüglich der der Brühkammer 36 zugeführten Menge an Brühwasser bzw. bezüglich dem Volumenstrom des in die Brühkammer 36 zugeführten Brühwassers über die Leitung L1 an die Steuereinheit 50 bzw. die Pumpensteuereinrichtung 50-1 übermittelbar sind. Weiterhin ist die Pumpensteuereinrichtung 50-1 mit der (Brühwasser-) Pumpe 23 über eine Leitung L2 zur Übertragung von Steuersignalen verbunden, wobei über diese Leitung L2 Steuersignale zwischen der Pumpensteuereinrichtung 50-1 und der Pumpe 23 übertragbar sind, um eine Steuerung der Pumpe 23 zu ermöglichen.

Einzelheiten der Brühvorrichtung 30 sind aus Fig. 2 ersichtlich. Die Brühvorrichtung 30 ist ausgelegt zum vollautomatischen Bereiten von gebrühten Kaffeegetränken, insbesondere Espresso, und beruht hinsichtlich ihrer Konstruktion auf Konzepten, welche beispielsweise aus EP 0 559 620 oder EP 2 196 116 bekannt sind. Die Brühvorrichtung 30 umfasst eine Reihe von Komponenten, welche an einer Tragstruktur 32 befestigt sind und zusammen mit der Tragstruktur 32 als Ganzes in den Kaffeeautomaten 10 montiert werden können. Die Brühvorrichtung 30 umfasst insbesondere einen Brühzylinder 33, welcher an der Tragstruktur 32 derart gelagert ist, dass er um eine (in Fig. 2 senkrecht zur Zeichenebene gerichtete) Drehachse R schwenkbar ist. Dadurch ist es möglich, den Brühzylinder 33 (mittels eines in Fig. 2 nicht dargestellten Antriebs) in zwei verschiedene Stellungen zu schwenken. Fig. 2 zeigt den Brühzylinder 33 in einer Stellung, in welcher die Brühvorrichtung 30 zum Bereiten eines gebrühten Kaffeegetränks bereit ist. In dieser Stellung ist der Brühzylinder 33 derart positioniert, dass ein Ende eines Brühkolbens 34, welcher in der Längsrichtung einer an der Tragstruktur befestigten Führung 34-1 linear beweglich und mittels eines Antriebs 34-2 entlang der Führung 34-1 bewegbar ist, entlang einer Längsachse A des Brühzylinders 33 durch eine an einem Ende des Brühzylinders 32 ausgebildete Öffnung 33-1 in den Brühzylinder 33 bewegt werden kann, sodass diese Öffnung 33-1 durch den Brühkolben 34 dicht verschlossen ist. Der Brühzylinder weist an einem der Öffnung 33-1 gegenüberliegenden Ende eine zweite Öffnung 33-2 auf, welche mittels eines entlang der Längsachse A des Brühzylinders 33 bewegbaren Kolbens 35 dicht verschlossen ist. Während des Brühens von Kaffee sind der Brühkolben 34 und der Kolben 35 derart relativ zum Brühzylinder 34 positioniert, dass in dem Brühzylinder 33 zwischen dem Brühkolben 34 und dem Kolben 36 die Brühkammer 36 ausgebildet ist.

Um mit der Brühvorrichtung 30 ein Kaffeegetränk bereiten zu können, muss zunächst gewährleistet sein, dass die Brühkammer 36 mit Kaffeepulver gefüllt ist. Wie aus Fig. 2 ersichtlich, mündet ein Ende der Brühwasser-Zufuhrleitung 31 in den Brühwassereinlass 35-1, welcher in dem Kolben 35 als ein durchgehender Kanal ausgebildet ist und über mehrere (in Fig. 2 nicht dargestellten Öffnungen) mit der Brühkammer 36 verbunden ist. Über die Brühwasser-Zufuhrleitung 31 kann heisses Brühwasser unter Druck in die Brühkammer 36 geleitet werden (wie in Fig. 2 durch einen Pfeil 31' angedeutet ist). Wie Fig. 2 weiterhin andeutet, ist der Kammerauslass 37 der Brühkammer 36 in den Brühkolben 34 integriert. Durch den Kammerauslass 37 kann ein in der Brühkammer 36 gebrühtes Kaffeegetränk die Brühkammer 36 verlassen. Wie aus Fig. 2 ersichtlich, ist ein Ende der Kaffee-Ausgabeleitung 40 an den Kammerauslass 37 abgeschlossen, sodass das gebrühte Kaffeegetränk in die Kaffee-Ausgabeleitung 40 strömen und zu den Kaffee-Ausgangsöffnungen 47 strömen kann (wie in Fig. 2 durch einen Pfeil 40' angedeutet ist). Wie Fig. 2 weiter andeutet, ist im Kammerauslass 37 der Brühkammer 36 ein Cremaventil 38 platziert.

Das Crémaventil 38 ist derart ausgelegt, dass es den Kammerauslass 37 der Brühkammer 36 verschlossen hält, solange der Druck des Brühwassers in der Brühkammer 36 einen vorgegebenen Mindestwert unterschreitet, und den Kammerauslass 37 zur Abgabe eines gebrühten Kaffeegetränks (z.B. Espresso) freigibt, wenn der Druck des Brühwassers in der Brühkammer 36 den vorgegebenen Mindestwert überschreitet.

Zu diesem Zweck ist das Cremaventil 38 als ein bewegbarer Kolben ausgebildet, welcher in einer Schliessstellung des Cremaventils 38 den Kammerauslass 37 dicht verschliesst. In Fig. 2 ist das Crémaventil 38 in der Schliessstellung dargestellt. Weiterhin umfasst die Brühvorrichtung 30 eine selbsttätige mechanische Rückstellvorrichtung 39, welche das Cremaventil 38 in einer (in Fig. 1 und 2 durch einen Pfeil 39-1 angegebene) Schliessrichtung 39-1 des Cremaventils 38 vorspannt, wobei das Cremaventil 38 - ausgehend von der Schliessstellung gemäss Fig. 2 - entgegen der Schliessrichtung 39-1 in einer (geöffnete) Stellung bewegbar ist, in welcher der Kammerauslass 37 freigegeben ist und zwischen dem Kammerauslass 37 und dem Cremaventil 38 ein Durchlassspalt ausgebildet ist, welcher eine für das Kaffeegetränk durchgängige Verbindung zwischen der Brühkammer 36 und der Kaffee-Ausgabeleitung 40 bildet. Im vorliegenden Beispiel ist die Rückstellvorrichtung 39 als eine Spiralfeder ausgebildet. Diese ist in der Schliessrichtung 39-1 derart vorgespannt, dass sie - wenn sich das Cremaventil 38 in der Schliessstellung (Fig. 2) befindet - auf das Cremaventil 38 eine in die Schliessrichtung 39-1 gerichtete Kraft ausübt und ausserdem, falls das Cremaventil 38 entgegen der Schliessrichtung 39-1 bewegt wird, auf das Cremaventil 38 eine in die Schliessrichtung 39-1 gerichtete Rückstellkraft ausübt.

Um die Brühkammer 36 vor dem Bereiten eines Kaffeegetränks mit Kaffeepulver zu füllen oder nach dem Bereiten eines Kaffeegetränks das zum Brühen des Kaffeegetränks verwendete Kaffeepulver wieder aus dem Brühzylinder 33 zu entfernen, kann der Brühzylinder 33 an einen Seitenrand 32-1 der Tragstruktur 32 geschwenkt werden. Zu diesem Zweck muss zunächst der Brühkolben 34 mittels des Antriebs 34-2 derart entlang der Führung 34-1 bewegt werden, dass der Brühkolben 34 nicht mehr in den Brühzylinder 33 ragt und die Öffnung 33-1 nicht verschliesst. Ist der Brühzylinder 33 zum Seitenrand 32-1 der Tragstruktur 32 geschwenkt, so ist die Öffnung 33-1 des Brühzylinders 33 frei zugänglich, sodass wahlweise gebrühtes Kaffeepulver (mit Hilfe des Kolbens 35) durch die Öffnung 33-1 (beispielsweise automatisch) entfernt oder zum Brühen bestimmtes Kaffeepulver durch die Öffnung 33-1 in den Brühzylinder 33 (beispielsweise automatisch) gefüllt werden kann.

Das Cremaventil 38 kann derart ausgelegt sein, dass Kaffeepulver in der Brühkammer 36 mit Brühwasser unter einem Druck von 5 Bar oder einem grösseren Druck gebrüht werden kann. Entsprechend kann die Pumpe 23 derart ausgelegt sein, dass Brühwasser mit einem Druck von 5 Bar oder einem grösseren Druck in die Brühkammer eingeleitet werden kann. Unter diesen Voraussetzungen ermöglicht die Brühvorrichtung 30 insbesondere die Bereitung eines gebrühten Kaffeegetränks in Form von Espresso.

Der Ablauf eines Brühvorgangs eines Kaffeegetränks gemäss der vorliegenden Erfindung wird im Folgenden näher erläutert.

Nach Inbetriebnahme der Pumpe 23 wird Frischwasser aus dem Wassertank 20 in Richtung des Brühwassererhitzers 24 gefördert, wobei die Menge durchlaufenden Wassers vom Durchflussmesser 22 erfasst und diese Information der Steuereinheit 50 bzw. der Pumpensteuereinrichtung 50-1 zugeleitet wird. Der Brühwasser-Erhitzer 24 erhitzt das durch ihn laufende Frischwasser auf die zum Brühen des Kaffeegetränks erforderliche Temperatur, welche im Regelfall zwischen 90 und 95 °C liegt.

Durch entsprechende Präparation, z.B. durch Befüllen der Brühkammer 36 mit Kaffeepulver, befindet sich die Brühvorrichtung 30 zu Beginn des Brühvorgangs in einem brühbereiten Zustand. Das entsprechend temperierte Brühwasser, welches am Brühwassereinlass 35-1 bereitgestellt ist, wird innerhalb der Brühvorrichtung 30 nun dazu verwendet, das Kaffeegetränk zu bereiten und an den Kammerauslass 37 der Brühkammer 36 auszugeben.

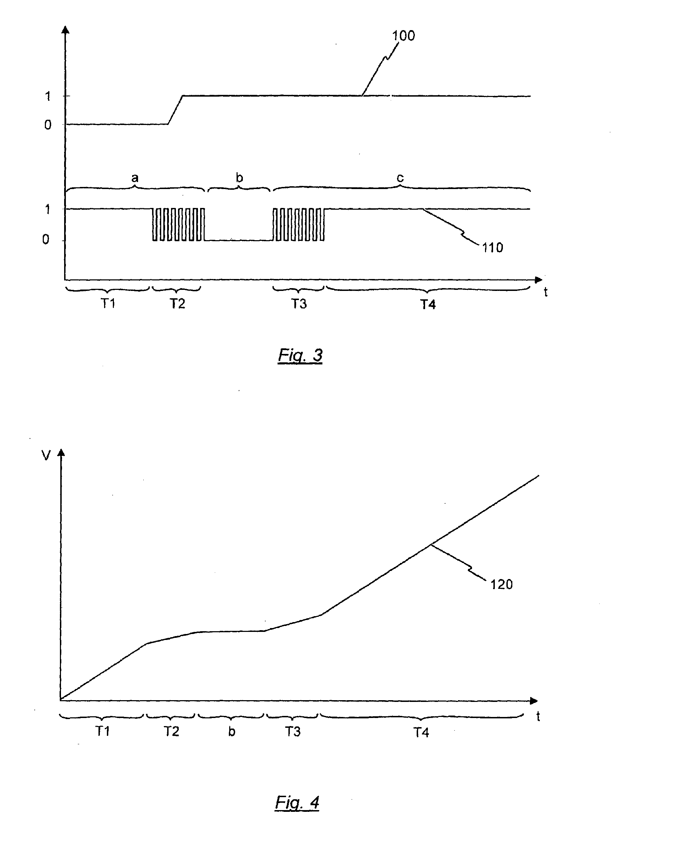

In dem kombinierten Diagramm gemäss Fig. 3 ist im oberen Teil zunächst der zeitliche Verlauf 100 der Position des Cremaventiles 38 des Kaffeeautomaten 10 bei der Durchführung des erfindungsgemässen Verfahrens im Verlauf dargestellt. Hierbei bezeichnet die mit 0 bezeichnete Stellung die Schliessstellung des Cremaventiles 38, d.h. diejenige Stellung, in welcher das Cremaventil 38 den Kammerauslass 37 der Brühkammer 36 verschliesst. Die mit 1 bezeichnete Stellung entspricht hierbei einer Stellung des Cremaventiles 38, bei welcher der Kammerauslass 37 "vollständig geöffnet" ist, d.h. bei welcher zwischen dem Kammerauslass 37 und dem Cremaventil 38 ein Durchlassspalt ausgebildet ist und das Cremaventil 38 derart weit von seiner Schliessstellung entfernt ist, dass die Breite des Durchlassspalts maximal ist.

Im unteren Teil des kombinierten Diagrammes gemäss Fig. 3 ist der zeitliche Verlauf 110 der Ansteuerung der Brühwasserpumpe 23, welche Brühwasser zum Brühwassereinlass 35-1 der Brühkammer 36 befördert, dargestellt. In diesem Diagramm ist die volle Pumpleistung mit 1 bezeichnet, ein Pumpenstillstand mit 0.

Um die effektive Förderleistung zu reduzieren, ist abschnittsweise vorgesehen, die (Brühwasser-) Pumpe 23 gepulst anzusteuern. Diese Bereiche sind in dem Diagramm durch einen schnellen Wechsel zwischen dem Zustand 0 (Pumpenstillstand) und 1 (voller Wirkbetrieb der Pumpe 23) zu erkennen.

Wie aus dem Diagramm in Fig. 3 ersichtlich ist, ist zwischen einer ersten Brühphase a und einer zweiten Brühphase c eine Brühpause b vorgesehen, in welcher die Pumpensteuereinrichtung 50-1 den Betrieb der Pumpe 23 stoppt. Während der ersten mit a bezeichneten Brühphase wird die Pumpe 23 während eines ersten Zeitraumes T1 mit voller Leistung betrieben, so dass sich ein relativ grosser erster Volumenstrom ergibt.

Wie weiterhin zu erkennen ist, wird die Pumpenleistung während eines zweiten Zeitraumes T2 der ersten Brühphase a reduziert, so dass der während dieser Zeit von der Pumpe 23 zum Brühwassereinlass 35-1 geförderte zweite Volumenstrom von Null verschieden, jedoch kleiner als der erste Volumenstrom ist. Vorzugsweise erfolgt in diesem Zeitraum die sanfte Öffnung des Cremaventiles 38, was in dem kombinierten Diagramm der Fig. 3 im entsprechenden zeitlichen Abschnitt des zeitlichen Verlaufes 100 der Cremaventilposition zu erkennen ist.

Nach der Brühpause b wird während eines ersten Zeitraumes T3 der zweiten Brühphase c die Pumpe mit Hilfe der Pumpensteuereinrichtung 50-1 wiederum in einen Betrieb mit reduzierter Förderleistung betrieben, so dass, wenn das Cremaventil 38 zu diesem Zeitpunkt noch nicht geöffnet wäre, in jedem Fall ein ebenso sanftes Öffnen sichergestellt wäre.

In dem sich anschliessenden zweiten Zeitraum T4 der zweiten Brühphase c wird die Pumpe 23 wiederum mit voller Förderleistung betrieben. Dies gewährleistet einen relativ schnellen Kaffeebezug.

In Fig. 4, welche mit dem Diagramm aus Fig. 3 auf der Zeitachse korrespondiert, ist der zeitliche Verlauf 120 des mit Hilfe der (Brühwasser-) Pumpe 23 geförderten Volumens V während eines Brühvorganges dargestellt. Ein derartiger zeitlicher Verlauf kann beispielsweise durch eine Messung mittels des Durchflussmessers 22 erhalten werden. Anhand dieses zeitlichen Volumenverlaufes kann die Pumpensteuerung 50-1 beispielsweise Beginn und Dauer der einzelnen Zeiträume (T1, T2, T3, T4) dem Verfahren entsprechend festlegen und somit die Gesamtmenge des während des Brühvorganges ausgegebenen Kaffeegetränkes steuern und überwachen. Da zudem der Druck des Brühwassers in der Brühkammer 36 (Brühwasserdruck) bis zum Öffnen des Cremaventils 38 vom zugeführten Brühwasservolumen abhängt, ist damit ein volumenabhängiges, relativ genaues und insbesondere rasches Annähern an den erforderlichen Mindestwert des Brühwasserdrucks, bei welchem das Cremaventil 38 öffnet, d.h. den Kammerauslass 37 freigibt, während des ersten Zeitraumes T1 der ersten Brühphase a möglich.

Wie zu erkennen ist, wird jeweils während der Zeiträume, in welchen die Pumpe 23 mit voller Leistung betrieben wird, nämlich im ersten Zeitraum T1 der ersten Brühphase a und im zweiten Zeitraum T4 der zweiten Brühphase c pro Zeiteinheit ein relativ grosses Volumen an Brühwasser durch die Brühkammer 36 befördert. Während des Pulsbetriebes der (Brühwasser-) Pumpe 23, d.h. während die Förderleistung der (Brühwasser-) Pumpe 23 reduziert ist, ist das geförderte Volumen entsprechend geringer, so dass sich eine geringere Steigung in dem in Fig. 4 dargestellten Diagramm für diese Zeiträume T2 und T3 ergibt. Innerhalb dieser Zeiträume unmittelbar vor bzw. nach der Brühpause b kann dann ein entsprechend sanftes Öffnen des Cremaventiles 38 zum Initiieren der Kaffeeausgabe durch den Kammerauslass 37 stattfinden.

## Patentansprüche

1. Verfahren zum Erzeugen eines Kaffeegetränkes in einer Brühvorrichtung (30) eines Kaffeeautomaten (10), wobei die Brühvorrichtung (30) eine Brühkammer (36) zum Aufnehmen gemahlenen Kaffees und die Brühkammer (36) einen Brühwassereinlass (35-1) und einen Kammerauslass (37) aufweist, wobei der Kaffeeautomat (10) ein mit einer selbsttätigen mechanischen Rückstelleinrichtung (39) in Schliessrichtung (39-1) vorgespanntes, in seiner Schliessstellung den Kammerauslass (37) verschliessendes Crémaventil (38) aufweist, wobei das Verfahren die folgenden Verfahrensschritte aufweist:
a) Zuführen von Brühwasser zum Brühwassereinlass (35-1) der Brühkammer (36) mit einem von Null verschiedenen ersten Volumenstrom während eines ersten Zeitraumes (T1) einer ersten Brühphase (a); und
b) zumindest zeitweises Zuführen von Brühwasser zum Brühwassereinlass (35-1) mit einem von Null verschiedenen zweiten und/oder dritten Volumenstrom während eines Zeitraumes unmittelbar nach dem ersten Zeitraum (T1), wobei der zweite und/oder der dritte Volumenstrom verschieden vom ersten Volumenstrom ist bzw. sind, und wobei der zweite und/oder der dritte Volumenstrom in der Art gewählt ist bzw. sind, dass das Crémaventil (38) während des Zeitraumes unmittelbar nach dem ersten Zeitraum (T1) öffnet,
**dadurch gekennzeichnet, dass** der zweite Volumenstrom und/oder der dritte Volumenstrom geringer als der erste Volumenstrom ist bzw. sind.

2. Verfahren nach Anspruch 1, wobei die Dauer des ersten Zeitraumes (T1) und/oder die Dauer des Zeitraumes unmittelbar nach dem ersten Zeitraum durch Messen eines Zuführvolumens des jeweils oder insgesamt zugeführten Brühwassers und/oder durch Messen eines Ausgabevolumens der jeweils oder insgesamt ausgegebenen Menge an Kaffeegetränk, vorzugsweise durch Messen mittels eines Durchflussmessers (22), festgelegt wird.

3. Verfahren nach Anspruch 1 oder 2, wobei der Verfahrensschritt b) Folgendes aufweist:
- Zuführen von Brühwasser zum Brühwassereinlass (35-1) mit einem von Null verschiedenen zweiten Volumenstrom während eines zweiten Zeitraumes (T2) der ersten Brühphase (a), wobei die Dauer des zweiten Zeitraumes (T2) insbesondere durch Messen eines Zuführvolumens des jeweils oder insgesamt zugeführten Brühwassers und/oder durch Messen eines Ausgabevolumens der jeweils oder insgesamt ausgegebenen Menge an Kaffeegetränk, vorzugsweise durch Messen mittels eines Durchflussmessers (22), festgelegt wird.

4. Verfahren nach Anspruch 3, wobei der Verfahrensschritt b) ferner Folgendes aufweist:
- Zuführen von Brühwasser zum Brühwassereinlass (35-1) mit einem von Null verschiedenen dritten Volumenstrom während eines ersten Zeitraumes (T3) einer zweiten Brühphase (c), wobei das Zuführen von Brühwasser zum Brühwassereinlass (35-1) während einer Brühpause (b) zwischen der ersten Brühphase (a) und der zweiten Brühphase (c) unterbrochen ist, und wobei die Dauer des dritten Zeitraumes (T3) insbesondere durch Messen eines Zuführvolumens des jeweils oder insgesamt zugeführten Brühwassers und/oder durch Messen eines Ausgabevolumens der jeweils oder insgesamt ausgegebenen Menge an Kaffeegetränk,, vorzugsweise durch Messen mittels eines Durchflussmessers (22), festgelegt wird.

5. Verfahren nach Anspruch 3 oder 4, wobei das Crémaventil (38) während des zweiten Zeitraumes (T2) der ersten Brühphase (a) öffnet.

6. Verfahren nach Anspruch 4, wobei das Crémaventil (38) während des ersten Zeitraumes (T3) der zweiten Brühphase (c) öffnet.

7. Verfahren nach einem der Ansprüche 3 bis 6, wobei der Brühkammer (36) während des ersten Zeitraumes (T1) der ersten Brühphase (a) ein grösseres Volumen an Brühwasser als während des zweiten Zeitraumes (T2) der ersten Brühphase (a) zugeführt wird und vorzugsweise der Brühkammer (38) während des ersten Zeitraumes (T1) der ersten Brühphase (a) etwa 80% des gesamten während der ersten Brühphase (a) zugeführten Brühwassers zugeführt wird.

8. Verfahren nach einem der Ansprüche 3 bis 7, wobei das Verfahren ferner den folgenden Verfahrensschritt aufweist:
- Zuführen von Brühwasser zum Brühwassereinlass (35-1) mit einem von Null verschiedenen vierten Volumenstrom während eines zweiten Zeitraumes (T4) der zweiten Brühphase (c), wobei der vierte Volumenstrom verschieden vom dritten Volumenstrom ist, und wobei die Dauer des vierten Zeitraumes (T4) insbesondere durch Messen eines Zuführvolumens des jeweils oder insgesamt zugeführten Brühwassers und/oder durch Messen eines Ausgabevolumens der jeweils oder insgesamt ausgegebenen Menge an Kaffeegetränk, vorzugsweise durch Messen mittels eines Durchflussmessers (22), festgelegt wird.

9. Verfahren nach Anspruch 8, wobei der Brühkammer während des ersten Zeitraumes (T3) der zweiten Brühphase (c) ein geringeres Volumen an Brühwasser als während des zweiten Zeitraumes (T2) der zweiten Brühphase (c) zugeführt wird.

10. Verfahren nach Anspruch 8 oder 9, wobei der vierte Volumenstrom grösser als der dritte Volumenstrom ist.

11. Kaffeeautomat (10) zum Durchführen des Verfahrens nach einem der vorhergehenden Ansprüche, wobei der Kaffeeautomat umfasst:
eine Brühvorrichtung (30) mit einer Brühkammer (36) zum Aufnehmen gemahlenen Kaffees, welche Brühkammer (36) einen Brühwassereinlass (35-1) und einen Kammerauslass (37) aufweist,
ein mit einer selbsttätigen mechanischen Rückstelleinrichtung (39) in Schliessrichtung (39-1) vorgespanntes, in seiner Schliessstellung den Kammerauslass (37) verschliessendes Crémaventil (38),
eine Pumpe (23), vorzugsweise eine Schwingkolbenpumpe, zum Zuführen des Brühwassers zum Brühwassereinlass (35-1) der Brühkammer (36) und
eine Pumpensteuereinrichtung (50-1) zum Ansteuern der Pumpe (23),
wobei die Pumpensteuereinrichtung (50-1) ausgelegt ist, die Pumpe (23) derart anzusteuern, dass die Pumpe (23) Brühwasser zum Brühwassereinlass (35-1) der Brühkammer (36)
während eines ersten Zeitraumes (T1) einer ersten Brühphase (a) mit einem von Null verschiedenen ersten Volumenstrom und
während eines Zeitraumes unmittelbar nach dem ersten Zeitraum (T1) zumindest zeitweise mit einem von Null verschiedenen zweiten und/oder dritten Volumenstrom zuführt,
wobei der zweite und/oder der dritte Volumenstrom verschieden vom ersten Volumenstrom ist bzw. sind, und wobei der zweite und/oder der dritte Volumenstrom in der Art gewählt ist bzw. sind, dass das Crémaventil (38) während des Zeitraumes unmittelbar nach dem ersten Zeitraum (T1) öffnet,
**dadurch gekennzeichnet, dass**
die Pumpensteuereinrichtung (50-1) ausgebildet ist, die Pumpe (23) derart anzusteuern, dass der zweite Volumenstrom und/oder der dritte Volumenstrom geringer als der erste Volumenstrom ist bzw. sind.

12. Kaffeeautomat (10) nach Anspruch 11, wobei die Pumpensteuereinrichtung (50-1) ausgelegt ist, die Volumenströme des zugeführten Brühwassers durch Ansteuerung der Pumpe (23) unterbrechungsfrei zu variieren.

13. Kaffeeautomat (10) nach Anspruch 12, wobei die Pumpensteuereinrichtung (50-1) die Volumenströme bei Wechselspannungsansteuerung der Pumpe durch Halbwellen- oder Periodenunterdrückung oder durch Phasenanschnitt der Wechselspannung variiert.

14. Kaffeeautomat (10) nach einem der Ansprüche 11 bis 13, wobei die Pumpensteuereinrichtung (50-1) weiterhin ausgelegt ist, Beginn und/oder Dauer der Zeiträume (T1, T2) der ersten Brühphase (a) und/oder Beginn und/oder Dauer der Zeiträume (T3, T4) der zweiten Brühphase (c) insbesondere durch Volumenmessung, vorzugsweise mittels eines Durchflussmessers (22), festzulegen, und wobei die Pumpensteuereinrichtung (50-1) ferner ausgelegt ist, in Abhängigkeit einer eingestellten oder einstellbaren Art oder Menge des gemahlenen Kaffees Beginn und/oder Dauer der Zeiträume (T1, T2, T3, T4) selbsttätig zu variieren.

## Claims

1. Method for producing a coffee beverage in a brewing apparatus (30) of a coffee machine (10), wherein the brewing apparatus (30) comprises a brewing chamber (36) for receiving ground coffee and the brewing chamber (36) has a brewing water inlet (35-1) and a chamber outlet (37), wherein the coffee machine (10) has a cream valve (38) which is pre-tensioned in the closure direction (39-1) by means of an automatic mechanical restoring device (39) and which closes the chamber outlet (37) in its closed position, wherein the method comprises the following process steps:
a) supplying brewing water to the brewing water inlet (35-1) of the brewing chamber (36) at a first volume flow rate different from zero during a first period of time (T1) of a first brewing phase (a); and
b) at least intermittently supplying brewing water to the brewing water inlet (35-1) at a second and/or third volume flow rate different from zero during a period of time immediately after the first period of time (T1), wherein the second and/or the third volume flow rate is or are different from the first volume flow rate and wherein the second and/or the third volume flow rate is or are selected in such a manner that the cream valve (38) opens during the period of time immediately after the first period of time (T1),
**characterised in that** the second volume flow rate and/or the third volume flow rate is or are lower than the first volume flow rate.

2. The method according to claim 1, wherein the duration of the first period of time (T1) and/or the duration of the period of time immediately after the first period of time is determined by measuring a supply volume of the brewing water supplied in each case or overall and/or by measuring a dispensing volume of the quantity of coffee beverage dispensed in each case or overall, preferably by measurement by means of a flow meter (22).

3. The method according to claim 1 or 2, wherein the process step b) comprises the following:
- supplying brewing water to the brewing water inlet (35-1) at a second volume flow rate different from zero during a second period of time (T2) of the first brewing phase (a), wherein the duration of the second period of time (T2) is determined in particular by measuring a supply volume of the brewing water supplied in each case or overall and/or by measuring a dispensing volume of the of the quantity of coffee beverage dispensed in each case or overall, preferably by measurement by means of a flow meter (22).

4. The method according to claim 3, wherein process step b) further comprises the following:
- supplying brewing water to the brewing water inlet (35-1) at a third volume flow rate different from zero during a first period of time (T3) of a second brewing phase (c), wherein the supply of brewing water to the brewing water inlet (35-1) is interrupted during a brewing pause (b) between the first brewing phase (a) and the second brewing phase (c), and wherein the duration of the third period of time (T3) is determined in particular by measuring a supply volume of the brewing water supplied in each case or overall and/or by measuring a dispensing volume of the quantity of coffee beverage dispensed in each case or overall, preferably by measurement by means of a flow meter (22).

5. The method according to claim 3 or 4, wherein the cream valve (38) opens during the second period of time (T2) of the first brewing phase (a).

6. The method according to claim 4, wherein the cream valve (38) opens during the first period of time (T3) of the second brewing phase (c).

7. The method according to one of claims 3 to 6, wherein during the first period of time (T1) of the first brewing phase (a) a larger volume of brewing water is supplied to the brewing chamber (36) than during the second period of time (T2) of the first brewing phase (a) and preferably about 80% of the entire brewing water supplied during the first brewing phase (a) is supplied to the brewing chamber (38) during the first period of time (T1) of the first brewing phase (a).

8. The method according to one of claims 3 to 7, wherein the method further comprises the following process step:
- supplying brewing water to the brewing water inlet (35-1) at a fourth volume flow rate different from zero during a second period of time (T4) of the second brewing phase (c), wherein the fourth volume flow is different from the third volume flow and wherein the duration of the fourth period of time (T4) is determined in particular by measuring a supply volume of the brewing water supplied in each case or overall and/or by measuring a dispensing volume of the quantity of coffee beverage dispensed in each case or overall, preferably by measurement by means of a flow meter (22).

9. The method according to claim 8, wherein a smaller volume of brewing water is supplied to the brewing chamber during the first period of time (T3) of the second brewing phase (c) than during the second period of time (T2) of the second brewing phase (c).

10. The method according to claim 8 or 9, wherein the fourth volume flow rate is higher than the third volume flow rate.

11. Coffee machine (10) for carrying out the method according to any one of the preceding claims, wherein the coffee machine comprises:
a brewing apparatus (30) having a brewing chamber (36) for receiving ground coffee, which brewing chamber (36) has a brewing water inlet (35-1) and a chamber outlet (37),
a cream valve (38) pre-tensioned with an independent mechanical restoring device (39) in the closing direction (39-1), which closes the chamber outlet (37),
a pump (23), preferably an oscillating piston pump for supplying the brewing water to the brewing water inlet (35-1) of the brewing chamber (36) and
a pump control device (50-1) for activating the pump (23),
wherein the pump control device (50-1) is designed to activate the pump (23) in such a manner that the pump (23) supplies brewing water to the brewing water inlet (35-1) of the brewing chamber (36)
during a first period of time (T1) of a first brewing phase (a) at a first volume flow rate different from zero and
during a period of time immediately after the first period of time (T1) at least intermittently at a second and/or third volume flow rate different from zero,
wherein the second and/or the third volume flow rate is or are different from the first volume flow rate and wherein the second and/or the third volume flow rate is or are selected in such a manner that the cream valve (38) opens during the period of time immediately after the first period of time (T1),
**characterised in that**
the pump control device (50-1) is configured to activate the pump (23) in such a manner that the second volume flow rate and/or the third volume flow rate is or are lower than the first volume flow rate

12. The coffee machine (10) according to claim 11, wherein the pump control device (50-1) is designed to vary the volume flow rates of the supplied brewing water by activating the pump (23) in an interruption-free manner.

13. The coffee machine (10) according to claim 12, wherein the pump control device (50-1) varies the volume flow rates during alternating voltage activation of the pump by half-wave or period suppression or by phase cutting of the alternating voltage.

14. The coffee machine (10) according to any one of claims 11 to 13, wherein the pump control device (50-1) is further designed to determine the beginning and/or duration of the periods of time (T1, T2) of the first brewing phase (a) and/or the beginning and/or duration of the periods of time (T3, T4) of the second brewing phase (c) in particular by volume measurement, preferably by means of a flow meter (22), and wherein the pump control device (50-1) is further designed to independently vary the beginning and/or duration of the periods of time (T1, T2, T3, T4) as a function of a set or adjustable type of quantity of the ground coffee.

## Revendications

1. Dispositif destiné à préparer une boisson au café dans un dispositif d'infusion (30) d'un distributeur de café (10), le dispositif d'infusion (30) comportant une chambre d'infusion (36) destinée à recevoir du café moulu et la chambre d'infusion (36) comportant une entrée (35-1) d'eau d'infusion et une sortie (37) de chambre, le distributeur de café (10) comportant une soupape à crème (38) précontrainte dans le sens de fermeture (39-1) à l'aide d'un système de rappel (39) mécanique automatique, fermant dans sa position de fermeture la sortie (37) de chambre, le procédé comportant les étapes de procédé suivantes :
a) Alimenter de l'eau d'infusion vers l'entrée (35-1) d'eau d'infusion de la chambre d'infusion (36) avec un premier débit volumétrique différent de zéro pendant une première période (T1) d'une première phase d'infusion (a) ; et
b) alimenter au moins temporairement de l'eau d'infusion vers l'entrée (35-1) d'eau d'infusion, avec un deuxième et/ou un troisième débit volumétrique différent de zéro pendant une période directement consécutive à la première période (T1), le premier et/ou le troisième débit volumétrique étant différent du premier débit volumétrique et le deuxième et/ou le troisième débit volumétrique étant choisi de telle sorte que la soupape à crème (38) s'ouvre pendant la période, directement consécutive à la première période (T1),
**caractérisé en ce que** le deuxième débit volumétrique et/ou le troisième débit volumétrique est ou sont inférieur(s) au premier débit volumétrique.

2. Procédé selon la revendication 1, la durée de la première période (T1) et/ou la durée de la période directement consécutive à la première période étant fixée par une mesure d'un volume d'alimentation de l'eau d'infusion chaque fois ou totalement alimentée et/ou par une mesure d'un volume de distribution de la quantité chaque fois ou totalement distribuée de boisson au café, de préférence par mesure au moyen d'un débitmètre (22).

3. Procédé selon la revendication 1 ou la revendication 2, l'étape de procédé b) présentant ce qui suit :
- Alimenter de l'eau d'infusion vers l'entrée (35-1) d'eau d'infusion avec un deuxième débit volumétrique différent de zéro pendant une deuxième période (T2) de la première phase d'infusion (a), la durée de la deuxième période (T2) étant fixée notamment par une mesure d'un volume d'alimentation de l'eau d'infusion chaque fois ou totalement alimentée et/ou par une mesure d'un volume de distribution de la quantité chaque fois ou totalement distribuée de boisson au café, de préférence par une mesure au moyen d'un débitmètre (22).

4. Procédé selon la revendication 3, l'étape de procédé b) présentant par ailleurs ce qui suit :
- Alimenter de l'eau d'infusion vers l'entrée (35-1) d'eau d'infusion avec un troisième débit volumétrique différent de zéro pendant une première période (T3) d'une deuxième phase d'infusion (c), l'alimentation d'eau d'infusion vers l'entrée (35-1) d'eau d'infusion étant interrompue pendant une pause d'infusion (b) entre la première phase d'infusion (a) et la deuxième phase d'infusion (c) et la durée de la troisième période (T3) étant fixée notamment par une mesure d'un volume d'alimentation de l'eau d'infusion chaque fois ou totalement alimentée et/ou par une mesure d'un volume de distribution de la quantité de boisson au café chaque fois ou totalement distribuée, de préférence par une mesure au moyen d'un débitmètre (22).

5. Procédé selon la revendication 3 ou la revendication 4, la soupape à crème (38) s'ouvrant pendant la deuxième période (T2) de la première phase d'infusion (a).

6. Procédé selon la revendication 4, la soupape à crème (38) s'ouvrant pendant la première période (T3) de la deuxième phase d'infusion (c).

7. Procédé selon l'une quelconque des revendications 3 à 6, lors duquel pendant la première période (T1) de la première phase d'infusion (a), il est alimenté vers la chambre d'infusion (36) un volume d'eau d'infusion supérieur à celui qui est alimenté pendant la deuxième période (T2) de la première phase d'infusion (a) et de préférence, pendant la première période (T1) de la première phase d'infusion (a), il est alimenté vers la chambre d'infusion (38) environ 80 % de la totalité d'eau d'infusion alimentée pendant la première phase d'infusion (a).

8. Procédé selon l'une quelconque des revendications 3 à 7, le procédé comportant en outre les étapes de procédé suivantes :
- Alimenter de l'eau d'infusion vers l'entrée (35-1) d'eau d'infusion avec un quatrième débit volumétrique différent de zéro pendant une deuxième période (T4) de la deuxième phase d'infusion (c), le quatrième débit volumétrique étant différent du troisième débit volumétrique et la durée de la quatrième période (T4) étant fixée notamment par une mesure d'un volume d'alimentation de l'eau d'infusion chaque fois ou totalement alimentée et/ou par une mesure d'un volume de distribution de la quantité de boisson au café chaque fois ou totalement distribuée, de préférence par une mesure au moyen d'un débitmètre (22).

9. Procédé selon la revendication 8, lors duquel pendant la première période (T3) de la deuxième phase d'infusion (c), il est alimenté vers la chambre d'infusion un volume d'eau d'infusion inférieur à celui qui lui est alimenté pendant la deuxième période (T2) de la deuxième phase d'infusion (c).

10. Procédé selon la revendication 8 ou la revendication 9, le quatrième débit volumétrique étant supérieur au troisième débit volumétrique.

11. Distributeur de café (10) destiné à réaliser le procédé selon l'une quelconque des revendications précédentes, le distributeur de café comprenant :
un dispositif d'infusion (30) avec une chambre d'infusion (36) destinée à recevoir du café moulu, laquelle chambre d'infusion (36) comporte une entrée (35-1) d'eau d'infusion et une sortie (37) de chambre d'infusion,
une soupape à crème (38) précontrainte dans la direction de fermeture (39-1) à l'aide d'un système de rappel (39) mécanique automatique, fermant la sortie (37) de la chambre dans sa position de fermeture,
une pompe (23), de préférence une pompe à pistons oscillants pour alimenter l'eau d'infusion vers l'entrée d'eau d'infusion (35-1) de la chambre d'infusion (36) et
un système de commande (50-1) de la pompe pour amorcer la pompe (23),
le système de commande (50-1) de la pompe étant conçu pour amorcer la pompe (23) de telle sorte que la pompe (23) alimente de l'eau d'infusion vers l'entrée (35-1) d'eau d'infusion de la chambre d'infusion (36)
pendant une première période (T1) d'une première phase d'infusion (a) un premier débit volumétrique différent de zéro et
pendant une période directement consécutive à la première période (T1), au moins temporairement un deuxième et/ou un troisième débit volumétrique différent de zéro,
le deuxième et/ou le troisième débit volumétrique étant différent(s) du premier débit volumétrique et le deuxième et/ou le troisième débit volumétrique étant choisi(s) de telle sorte que la soupape à crème (38) s'ouvre pendant la période, directement consécutive à la première période (T1) ;
**caractérisé en ce que**
le système de commande (50-1) de la pompe est conçu pour amorcer la pompe (23) de telle sorte que le deuxième débit volumétrique et/ou le troisième débit volumétrique soit ou soient inférieur(s) au premier débit volumétrique.

12. Distributeur de café (10) selon la revendication 11, le système de commande (50-1) de la pompe étant conçu pour faire varier sans interruption les débits volumétriques de l'eau d'infusion alimentée par amorçage de la pompe (23).

13. Distributeur de café (10) selon la revendication 12, le système de commande (50-1) de la pompe faisant varier les débits volumétriques lors d'un amorçage par tension alternative de la pompe par suppression de demi-ondes ou de périodes ou par découpage de phase de la tension alternative.

14. Distributeur de café (10) selon l'une quelconque des revendications 11 à 13, le système de commande (50-1) de la pompe étant conçu par ailleurs pour fixer le début et/ou la durée des périodes (T1, T2) de la première phase d'infusion (a) et/ou le début et/ou la fin et/ou la durée des périodes (T3, T4) de la deuxième phase d'infusion (c), notamment par une mesure volumétrique, de préférence au moyen d'un débitmètre (22) et le système de commande (50-1) de la pompe étant conçu en outre pour faire varier automatiquement le début et/ou la durée des périodes (T1, T2, T3, T4) en fonction d'un type ou d'une quantité réglé(e) ou réglable du café moulu.
